# EUROPEAN PATENT APPLICATION

(11) **EP 1 513 342 A2**
(43) Date of publication of application: **09.03.2005**
(21) Application number: 04252158.3
(22) Date of filing: 13.04.2004
(51) Int. Cl.: H04N 5/68

(54) **System and method for storing audio/video data**

(30) Priority: 29.04.2003 GB 0309663
(71) Applicant: Synectic Systems Limited, Sheffield S8 OTB (GB)
(72) Inventor: Robinson, Glenn, Melbourne Derby DE73 1EG (GB); Houghton, Andrew David, Sheffield S17 4NA (GB)
(74) Representative: Waddington, Richard

(57) **Abstract**

A system and method for managing a volume of audio/video data is disclosed herein whereby the amount of data captured is varied according to an estimated required quality and/or frame rate of the data. Alternatively, the quality and/or frame of captured data may be degraded over time to reduce storage requirement.

## Description

### Field of the Invention

This invention relates to a system and method for storing audio/video data.

### Background of the Invention

It is known to provide digital audio/video acquisition, storage and retrieval systems for medium and large scale video surveillance applications such as those used by local authorities in city centres. In general a policy is agreed upon which defines the number of cameras present, the duration of storage (e.g. minimum number of days a recording **must** be kept), the type of source (e.g. single- or multiplexed-camera sequences), the mode of the recording (e.g. full frame rate or time lapsed, with or without audio, motion detection & etc) and overall quality settings (usually in terms of data bit-rate or image resolution and file size).

Taken together, these factors determine the overall size of data storage pool that will be required to fulfil a customer's requirements. The storage pool may range from a single hard disk drive thorough to centralized mass storage designs using RAID arrays and ultra scalable tape libraries, from IT manufacturers such as IBM.

Given the cost of storage, methodologies exist to reduce the amount required, or to enhance the recording duration. A typical and commonly used case would be motion detection. Here, video sequences are only retained if they are believed to contain certain motion characteristics which can often be defined in terms of specific areas within the video or minimum levels of activity. On a busy shopping street with moving cameras such an approach is ineffective but, with a fixed internal camera in say a corridor, the results can be dramatic. Other approaches include reducing the video capture rate from full frame rate to time lapsed, where only one in n pictures are stored as single isolated frames.

Motion detection cannot provide useful (and reliable) data reduction in all circumstances; while on the other hand, time-lapsing may incur undesirable quality loss.

It is an object of the present invention to address the above-mentioned disadvantages.

### Summary of the Invention

According to a first aspect of the present invention a method of storing audio/video data comprises:
capturing a plurality of audio/video data;
storing said audio/video data at a first spatial and/or temporal resolution for a first time period; and
storing said audio/video data at a second, lower, spatial and/or temporal resolution for at least a second, later, time period.

References to audio/video data in relation to the invention should also to be interpreted to include references to associated data or metadata, such as the occurrence of an alarm in a surveillance video, or the details of information automatically identified in an image or audio track, such as a car number plate or voice.

The first/second spatial resolution may be a number of bits/pixels per frame of video data. The first/second temporal resolution may be a frame rate of video data or a bit rate.

The method preferably includes removing first selected audio/video data from said audio/video data stored at said first spatial and/or temporal resolution to achieve said second spatial and/or temporal resolution.

Said first selected audio/video data may be frames of video data, preferably of a first specified type of frame.

The method may include a step of storing said audio/video data at a third, still lower, spatial and/or temporal resolution for at least a third, still later, time period.

Said latter step preferably follows removing second selected audio/video data from said audio/video data stored at said second spatial and/or temporal resolution to achieve said third spatial and/or temporal resolution.

Said selected audio/video data may be frames of audio/video data of a second specified type of frame.

Third or subsequent selected audio/video data may be removed from said audio/video data of said second or subsequent spatial and/or temporal resolution.

The audio/video data may be stored in an MPEG (any of the MPEG formats) or MJPEG format. In which case said first selected audio/video data are preferably B-frames, said second selected audio/video data are preferably P-frames, and/or said third selected audio data are preferably some of the I-frames of the audio/video data.

The first time period may be approximately 0.5 to 2 days in length, which may be about one day. The second time period may be approximately 5 to 10 days in length. The third time period may be in excess of one month.

The first selected audio/video data may constitute approximately 40% to 60% of the total data, or may constitute approximately 55% to 65%. The second selected audio/video data may constitute approximately 25% to 45% of the total data, or approximately 30% to 35% of the total data. The third selected audio/video data may constitute approximately half of the audio/video data retained for the second period.

Data may be retained in a given resolution for a period related to its expected value or utility.

According to a second aspect of the invention a system for storing audio/video data comprises:
at least one audio/video data capture means;
audio/video data storage means; and
control means;
wherein the system is operable to capture audio/video data and store said audio/video data at a first spatial and/or temporal resolution for a first time period and is operable to store said audio/video data at a second, lower, spatial and/or temporal resolution for at least a second, later, time period.

Preferably, the control means is operable to remove first selected audio/video data from said audio/video data stored at said first spatial and/or temporal resolution to achieve said second spatial and/or temporal resolution. Likewise, the control means is preferably operable to remove second or subsequent selected audio/video data to achieve a third or subsequent spatial and/or temporal data resolution.

According to a third aspect of the invention a computer is provided wherein said computer is programmed to perform the method of the first aspect.

According to a fourth aspect of the invention a computer program product is operable to perform the method of the first aspect.

According to a fifth aspect of the invention, a method of capturing audio/video data comprises selectively capturing audio/video data for storage at a given spatial and/or temporal resolution based on an expectation of the value and/or utility, of said audio/video data.

The temporal and/or spatial resolution of capture of the audio/video data may be improved for audio/video of expected higher value and/or utility. Data may be captured in real time, rather than in time.

According to a sixth aspect of the invention a system for capturing audio/video data comprises audio/video data capture means, storage means and control means, wherein the system is operable to perform the method of the fifth aspect.

All of the features disclosed herein may be combined with any of the above aspects, in any combination.

For a better understanding of the invention and to show how the same may be brought into effect, the invention will now be described, by way of example, with reference to the accompanying drawing in which,

### Brief Description of the Drawing

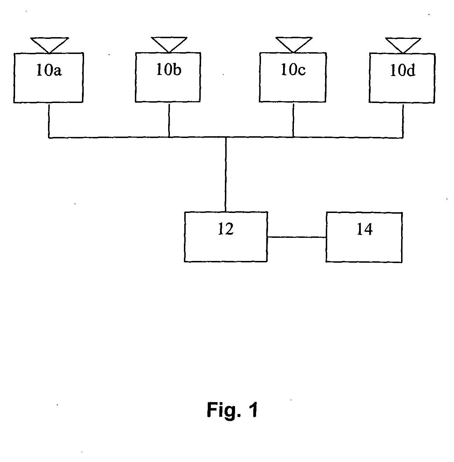

Figure 1 is a schematic representation of a system for capturing and recording images.

### Detailed Description

A system and method for managing a volume of video/audio data stored is disclosed herein whereby the amount of data captured is varied according to an estimated required quality and/or frame rate of the data. Alternatively, the quality and/or frame rate of captured data may be degraded over time to reduce storage requirements.

The solution proposed by the applicant falls into two principal categories referred to above. The first is termed *agile encoding,* and the latter, *agile post decimation.* The applicant recognises that the problem is one of optimising the use of the available data storage pool (the data storage capacity) and this is achieved by an awareness that the value of audio and video (audio and video being specific to our applications and not the generic situation) data may vary over time. For example, in a typical city centre scenario an incident such as a pub brawl or an attack will be discovered by the police within a relatively short period of time and video/audio footage of the incident will have high relative value. However, in most cases, after a day or so it will be known that no incident of note has taken place and, therefore, the value of the audio and video footage becomes lower, although not necessarily zero. In cases of terrorism, for example, older footage may reveal precursors to carefully laid attacks such as reconnaissance missions.

Clearly it is desirable that footage is of the highest quality where incidents have taken place, but quality is less important where there are no incidents. Use of fixed schemes like time-lapsing reduces the storage pool required, but **compromises** the overall value of footage. Higher quality schemes like MPEG-II (when used with a suitably high bit rate), however, give high value footage which is not required most of the time and uses excessive amounts of storage.

Agile encoding is one part of a possible solution to this problem where the mode in which encoders operate is variable. For example, in and around a football stadium, time-lapse recording (by a reduced frame rate) might be more than adequate for six days of the week but on match days, the mode can be changed to full frame rate MPEG.

Unfortunately, however, in many situations the likelihood of incidents is less predictable and this is where agile post decimation becomes important. By recognising that, for a period of between a few hours and a day or so, footage is of potentially high value it makes sense to record in high quality MPEG-II. However, after some defined period, if no incidents have been noted, the data might well be reduced in content to a lower quality and space-saving time-lapse format. This can be achieved in several ways, one of which is to record both time-lapse and MPEG-II at the same time, deleting the MPEG-II if and when high quality is no longer required. While technically feasible, this is not aesthetically pleasing, nor is it optimal since it requires extra storage as both MPEG and time-lapse footage of the same events must be maintained for the period of high quality retention.

The applicant proposes a post-decimation process which takes high quality MPEG and, after a first definable period of time, reduces it in content to pseudo time-lapse in the absence of events. After a second definable period of time, this pseudo time-lapse footage is further reduced to full time-lapse form. After this, any amount of subsequent decimation is trivial, simply by dropping more and more pictures from the sequence.

### Post-decimation of MPEG

MPEG is particularly amenable to post-decimation on account of its structure which is described here in a little more detail. MPEG is a digital form of both video and audio footage which is highly compressed. This means that video stored as MPEG already requires far less storage that would raw (uncompressed) video. For example, a typical movie will fit (in MPEG form) on a DVD in about 4Gbytes of data. However, the raw (uncompressed) movie would require about 150 Gbytes or 37 DVDs.

An MPEG video stream typically contains three types of picture, or frame, which are formed into larger structures called GOPs (group of pictures). The structure or mixture of these pictures can be specified during the encoding process in order to give the MPEG particular characteristics. Each picture within the MPEG stream decodes to produce a complete video image. However, depending upon the MPEG picture type, there will be a dependency upon other pictures within the MPEG stream. The picture types are
- I-frame: this is an intra-coded image which is completely self-contained and does not refer back or forward to any other frames in a series. In other words, if an I-frame is isolated from the MPEG stream it can be decoded to create a picture. An I-frame is roughly equivalent to a JPEG still picture.
- P-frame: this is a predicted image. In order to construct a picture from a P-frame, it is necessary to know the previous P- or I-frame. The reason for this is that a P-frame uses blocks from the previous P- or I-frame to construct the picture. If the previous P- or I-frame is not known, then reconstruction cannot take place.
- B-frame: this is a bi-directional encoded image. To decode a B-frame into a picture requires both the previous P- or I-frame and a future P- or I-frame (future pictures are known by changing the order in which pictures are transmitted).

Clearly, I-frames are self-contained, P-frames require P-and I- frames for reconstruction to be possible and B-frames also require P- and I-frames for reconstruction. A typical GOP might have the following series of frames:

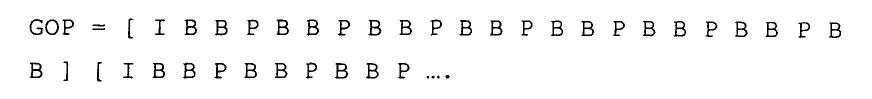

In this example, the GOP in the square brackets is 24 frames comprising 1 I-frame, 7 P-frames and 16 B-frames. The size of the GOP determines the maximum time before decoding can take place and, the maximum persistence of errors in the decoded stream. Imagine that you turn on your digital television. It will not be possible to view any pictures until the first I-frame arrives. Further, if the signal is interrupted, uncorrected errors will manifest themselves on the TV screen until the arrival of the next I-frame since, once an error is introduced, P-and B- frames will perpetuate it, using previous (and future) images as the basis for reconstruction. Considerations like these determine the GOP structure. Closely spaced I-frames would be nice, but they're bigger than P- or B-frames. In fact, in terms of overall data, the I-frame will occupy about 16% of the GOP, P-frames 33% and B-frames 51%, depending on image content, giving a relative size ratio of about 16:5:3. These figures all relate to the chosen GOP of 24 frames, although 19 frames is another option.

Since no pictures are based on B-frames except themselves, it is possible to drop B-frames from the MPEG stream and yet still process I- and P-frames as before. This forms the first step in the post-decimation method described herein. The GOP above, would yield 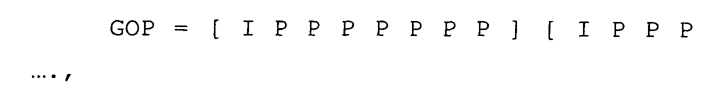 after such decimation, equivalent to a time-lapsed sequence of pictures at about 8.3 pictures per second. Reduced from the 24 frames per second for the full encoded sequence. The next step in decimation is, of course, to drop P-frames since I-frames can stand alone. This would yield a drop in picture rate to about 1.042 pictures per second.

Using this as the basis for demonstration, 1 camera recording MPEG for one week would need about 336Gbytes of storage. Using a primary storage period of 1 day, for I, P and B frames, and a secondary storage period, for I and P frames, of one day would extend the recording duration to about 36 days. Alternatively, the storage pool requirement could be reduced to about 79Gbytes, less than one quarter of the original.

Decimation is achieved by parsing the MPEG stream for flags which are special sequences of data bytes. In general flags are four sequential bytes with the form 00 00 01 XX, where XX is the flag identification. The start of each frame within an MPEG sequence is identified by the flag 00 00 01 00. Further, the start of each GOP is identified by the flag 00 00 01 0xB8. If necessary, more of the stream can be parsed in order to identify the type of each frame. However, if the construction of the stream is known a priori, this is not necessary since frame type is implicit in its position within the GOP.

Further post decimation may be achieved by isolating and discarding individual I-frames, again, parsing flags in order to identify where frames begin and end. Throwing away every other I-frame would reduce the sequence to one picture every 1.92 seconds, for example.

Figure 1 shows schematically the type of system described herein, wherein a plurality of image capture devices 10a-d transmit images to a storage means 12. A control means 14 selectively degrades the capture images stored in the storage means 12, according to a scheme as set out above. The capture of images, i.e. the agile encoding referred to above is also achieved by the control means 14.

### Summary

The applicant has identified that the value of certain data types changes with age and, further, that it is possible to match this value to data resolution in order to optimise the cost/size/recording duration of the storage medium without compromising the integrity of high-value data.

In the context of video storage, the applicant devised a novel and simple process whereby standard MPEG video streams can be decimated from full frame rate into a time-lapsed format. Depending on the MPEG structure used, there may be several stages in this process, allowing gradual data decay. In particular, by observing the MPEG flags, it is possible first to remove B-frames, then P-frames and finally to sub-sample I-frames ad-infinitum.

While post-decimation of MPEG is specific to AV media, the underlying concept of data decay is generic and may be applied to all manner of data types. For example, in a typical industrial process, high value data may be acquired and, if there are no process anomalies which require detailed scrutiny, the data may be filtered/subsampled for longer term archiving.

These above examples relate to the use of MPEG/MJPEG data streams within a digital video storage environment. However, it is equally the case that the process may apply in a more generic fashion and, therefore, limiting the application to either MPEG, JPEG or digital video storage is not a requirement of the method disclosed.

It is the inventive realisation of the applicant that it is not necessary to compromise on the quality of video/audio footage when the data is captured. By decimating the footage after a period of time, when the value of the footage has reduced, it is possible to have high quality data when needed, but not to store that data for longer than is necessary.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of storing audio/video data comprises:
capturing a plurality of audio/video data;
storing said audio/video data at a first spatial and/or temporal resolution for a first time period; and
storing said audio/video data at a second, lower, spatial and/or temporal resolution for at least a second, later, time period.

2. A method as claimed in claim 1, in which the first/second spatial resolution is a number of bits/pixels per frame of video data.

3. A method as claimed in either claim 1 or claim 2, in which the first/second temporal resolution is a frame rate of video data or a bit rate.

4. A method as claimed in claim 1 or claim 2, which includes removing first selected audio/video data from said audio/video data stored at said first spatial resolution and/or temporal resolution to achieve said second spatial and/or temporal resolution.

5. A method as claimed in claim 1 or claim 2, which includes a step of storing said audio/video at a third, still lower, spatial and/or temporal resolution for at least a third, still later, time period.

6. A method as claimed in claim 5, in which the step of storing said audio/video data at the third spatial and/or temporal resolution follows removing second selected audio/video data from said audio video data stored at said second spatial and/or temporal resolution to achieve said third spatial and/or temporal resolution.

7. A method as claimed in claim 4, in which said selected audio/video data are frames of audio/video data of a second specified type of frame.

8. A method as claimed in any preceding claim, in which the audio/video data is stored in an MPEG or MJPEG format.

9. A method as claimed in claim 8, in which said first selected audio/video data are preferably B-frames.

10. A method as claimed in either claim 8 or claim 9, in which said second selected audio/video data are P-frames.

11. A method as claimed in claim 8 or claim 9, in which said third selected audio data is a plurality of 1-frames of the audio/video data.

12. A system for storing audio/video data comprises:
at least one audio/video data capture means;
audio/video data storage means; and
control means;
wherein the system is operable to capture audio/video data and store said audio/video data at a first spatial and/or temporal resolution for a first time period and is operable to store said audio/video data at a second, lower, spatial and/or temporal resolution for at least a second, later, time period.

13. A computer programmed to perform the method of any one of claims 1 to 11.

14. A computer programmed to perform the method of any one of claims 1 to 11.

15. A system for capturing audio/video data comprises audio/video data capture means, storage means and control means, wherein the system is operable to perform the method of any one of claims 1 to 11.
